(19) Europäisches Patentamt / European Patent Office / Office européen des brevets

(11) **EP 2 571 273 A2**

# (12) EUROPEAN PATENT APPLICATION
published in accordance with Art. 153(4) EPC

(43) Date of publication:
**20.03.2013 Bulletin 2013/12**

(51) Int Cl.:
**H04N 7/32** *(2006.01)*

(21) Application number: **11780861.8**

(86) International application number:
**PCT/KR2011/003606**

(22) Date of filing: **16.05.2011**

(87) International publication number:
**WO 2011/142644 (17.11.2011 Gazette 2011/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.05.2011 KR 20110045837**
**14.05.2010 US 334640 P**

(71) Applicant: **Samsung Electronics Co., Ltd**
**Gyeonggi-do 443-742 (KR)**

(72) Inventors:
- **CHEN, Jianle**
**Suwon-si**
**Gyeonggi-do 443-725 (KR)**

- **HAN, Woo-Jin**
**Suwon-si**
**Gyeonggi-do 443-714 (KR)**
- **SHLYAKHOV, Nikolay**
**Suwon-si**
**Gyeonggi-do 443-070 (KR)**
- **SEREGIN, Vadim**
**Suwon-si**
**Gyeonggi-do 443-740 (KR)**

(74) Representative: **Davies, Robert Ean**
**Appleyard Lees**
**15 Clare Road**
**Halifax**
**Yorkshire HX1 2HY (GB)**

(54) **METHOD FOR ENCODING AND DECODING VIDEO AND APPARATUS FOR ENCODING AND DECODING VIDEO USING EXPANDED BLOCK FILTERING**

(57) Methods and apparatuses for encoding and decoding a video. The method of encoding a video includes: generating an extended corresponding block by extending a corresponding block of a reference picture used in motion compensation of a current block to a predetermined size; generating a filtered extended corresponding block by applying a predetermined first filter to the extended corresponding block; performing interpolation in sub-pixel units by applying a predetermined second filter to the filtered extended corresponding block; and performing motion prediction and compensation by using the reference picture that is interpolated in the sub-pixel units.

FIG. 1

**Description**

TECHNICAL FIELD

The present invention relates to an interpolation filter interpolating a reference image for motion prediction and compensation, and more particularly, to methods and apparatuses for encoding and decoding a video, which extend a corresponding block of a reference picture, perform filtering on the extended corresponding block by applying an infinite impulse response (IIR) filter, and then performing interpolation on the IIR filtered extended corresponding block in sub-pixel units.

BACKGROUND ART

In image compression methods, such as Moving Picture Experts Group (MPEG)-1, MPEG-2, MPEG-4, or H.264/MPEG-4 Advanced Video Coding (AVC), a picture is divided into macroblocks in order to encode an image. Each of the macroblocks is encoded in all encoding modes that can be used in inter prediction or intra prediction, and then is encoded in an encoding mode that is selected according to a bit rate used to encode the macroblock and a distortion degree of a decoded macroblock based on the original macroblock.

In inter prediction, a motion vector is generated by searching for a region in a reference picture similar to a current block to be encoded by using at least one reference picture located in front of or at the rear of a currently encoded picture, and a prediction block of the current block is generated by performing motion compensation using the generated motion vector.

In order to increase prediction accuracy, motion compensation is performed in a unit of sub-pixel resolution that is more precise than an integer pixel resolution. For example, a reference picture is interpolated by generating sub-pixels, such as a 1/2 pixel (half pel), a 1/4 pixel (quarter pel), and a 1/8 pixel (one eighth pel), between integer pixels of the reference picture, and then motion compensation is performed by using the interpolated reference picture.

DETAILED DESCRIPTION OF THE INVENTION

TECHNICAL PROBLEM

The present invention provides methods and apparatuses for encoding and decoding a video, wherein prediction efficiency is improved during motion compensation of the video by extending a corresponding block of a reference picture used during the motion compensation and then generating an interpolated reference picture via block-based infinite impulse response filtering and finite impulse response filtering.

The present invention also provides methods and apparatuses for encoding and decoding a video, wherein prediction efficiency is improved without remarkably increasing operation complexity by applying an infinite impulse response filter only to a predetermined region of a reference picture.

TECHNICAL SOLUTION

According to embodiments of the present invention, interpolation is performed after extending a corresponding block of a reference picture used in motion compensation of a current block and applying a filter having an infinite impulse response characteristic to the extended corresponding block.

ADVANTAGEOUS EFFECTS

According to the present invention compression efficiency can be improved during motion prediction and compensation of a video.

DESCRIPTION OF THE DRAWINGS

FIG. 1 is a block diagram of a structure of an apparatus for encoding a video, according to an embodiment of the present invention;
FIG. 2 is a block diagram of a detailed structure of a reference picture interpolator of FIG. 1;
FIG. 3 is a reference diagram for describing a process of generating an extended corresponding block, according to an embodiment of the present invention;

FIG. 4 is a reference diagram for describing a filtering operation performed by a first filtering unit in a row direction, according to an embodiment of the present invention;

FIG. 5 is a reference diagram for describing a filtering operation performed by the first filtering unit in a column direction, according to an embodiment of the present invention;

FIG. 6 is a reference diagram for describing an interpolation process performed by a second filtering unit of FIG. 2;

FIG. 7 is a flowchart illustrating a method of encoding a video, according to an embodiment of the present invention;

FIG. 8 is a block diagram of an apparatus for decoding a video, according to an embodiment of the present invention; and

FIG. 9 is a flowchart illustrating a method of decoding a video, according to an embodiment of the present invention.

BEST MODE

According to an aspect of the present invention, there is provided a method of encoding a video, the method comprising: generating an extended corresponding block by extending a corresponding block of a reference picture used in motion compensation of a current block to a predetermined size; generating a filtered extended corresponding block by applying a predetermined first filter to the extended corresponding block; performing interpolation in sub-pixel units by applying a predetermined second filter to the filtered extended corresponding block; and performing motion prediction and compensation by using the reference picture that is interpolated in the sub-pixel units.

According to another aspect of the present invention, there is provided a method of decoding a video, the method comprising: extracting information about a motion vector of a current block to be decoded from a received bitstream; generating an extended corresponding block by extending a corresponding block of a reference picture indicated by the motion vector to a predetermined size; generating a filtered extended corresponding block by applying a predetermined first filter to the extended corresponding block; performing interpolation in sub-pixel units by applying a predetermined second filter to the filtered extended corresponding block; and performing motion compensation by using the reference picture that is interpolated in the sub-pixel units.

According to another aspect of the present invention, there is provided an apparatus for encoding a video, the apparatus comprising: a block extender for generating an extended corresponding block by extending a corresponding block of a reference picture used in motion compensation of a current block to a predetermined size; a first filtering unit for generating a filtered extended corresponding block by applying a predetermined first filter to the extended corresponding block; a second filtering unit for performing interpolation in sub-pixel units by applying a predetermined second filter to the filtered extended corresponding block; and a motion predictor and compensator for performing motion prediction and compensation by using the reference picture that is interpolated in the sub-pixel units.

According to another aspect of the present invention, there is provided an apparatus for decoding a video, the apparatus comprising: an entropy decoder for extracting information about a motion vector of a current block to be decoded from a received bitstream; a block extender for generating an extended corresponding block by extending a corresponding block of a reference picture indicated by the motion vector to a predetermined size; a first filtering unit for generating a filtered extended corresponding block by applying a predetermined first filter to the extended corresponding block; a second filtering unit for performing interpolation in sub-pixel units by applying a predetermined second filter to the filtered extended corresponding block; and a motion compensator for performing motion compensation by using the reference picture that is interpolated in the sub-pixel units.

MODE OF THE INVENTION

Hereinafter, the present invention will be described more fully with reference to the accompanying drawings, in which exemplary embodiments of the invention are shown.

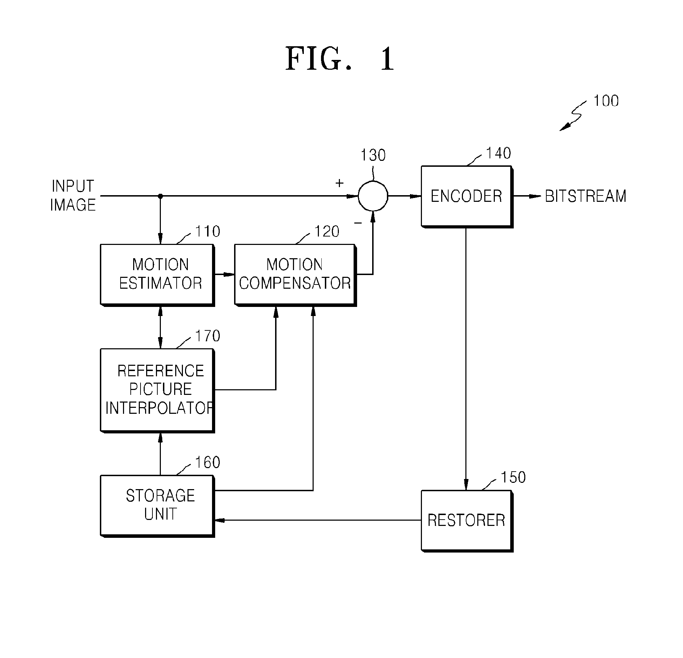

FIG. 1 is a block diagram of a structure of an apparatus 100 for encoding a video, according to an embodiment of the present invention.

Referring to FIG. 1, the apparatus 100 according to an embodiment of the present invention includes a motion estimator 110, a motion compensator 120, a subtractor 130, an encoder 140, a restorer 150, a storage unit 160, and a reference picture interpolator 170.

The motion estimator 110 generates a motion vector of a current block by performing motion prediction using data of a reference picture. In detail, the motion estimator 110 searches for a corresponding block in the reference picture most similar to the current block of a current picture to be encoded, and generates the motion vector based on a location difference between the current block and the corresponding block. Here, the motion estimator 110 generates a motion vector in integer pixel unit by using a reference picture in integer pixel units stored in the storage unit 160 during initial motion prediction. Also, the motion estimator 110 may not only perform motion prediction by using a reference picture in integer pixel units, but also motion prediction by using a reference picture that is interpolated in a resolution of a sub-pixel, such as 1/2 pixel or 1/4 pixel by the reference picture interpolator 170.

The reference picture interpolator 170 generates an extended corresponding block by extending the corresponding block of the reference picture indicated by the motion vector in the integer pixel units based on a motion vector in integer pixel units of the current block, and generates a filtered extended corresponding block by applying a first filter having an infinite impulse response (IIR) characteristic to the extended corresponding block. Also, the reference picture interpolator 170 generates a reference picture interpolated in the resolution of a sub-pixel by applying a second filter having a finite impulse response (FIR) characteristic to the filtered extended corresponding block. Detailed operations of the reference picture interpolator 170 will be described later.

The motion compensator 120 generates a prediction block of the current block by obtaining a motion compensation value of the current block indicated by the motion vector of the current block, from the interpolated reference picture. If a determined optimum motion vector is in integer pixel units, the motion compensator 120 may perform motion compensation by using the reference picture that is not interpolated, instead of the reference picture that is interpolated.

The subtractor 130 calculates a residual block that is a difference between the prediction block and an original input block. The encoder 140 generates a bitstream by transforming, quantizing, and entropy encoding the residual block. Also, the encoder 140 may insert predetermined index information indicating whether motion compensation is performed by using the reference picture interpolated via filtering of the extended corresponding block by the reference picture interpolator 170 into a predetermined region of the generated bitstream along with information about the motion vector of the current block. In other words, a one-bit flag having a value of "0" is inserted into the bitstream when a reference picture is interpolated according to a general technology and a one-bit flag having a value of "1" is inserted into the bitstream when the reference picture interpolated via filtering of the extended corresponding block is used according to an embodiment of the present invention so that a decoding unit determines whether the reference picture interpolated via filtering of the extended corresponding block is generated. Such predetermined index information may be set in a slice or sequence unit and included in a slice or sequence header.

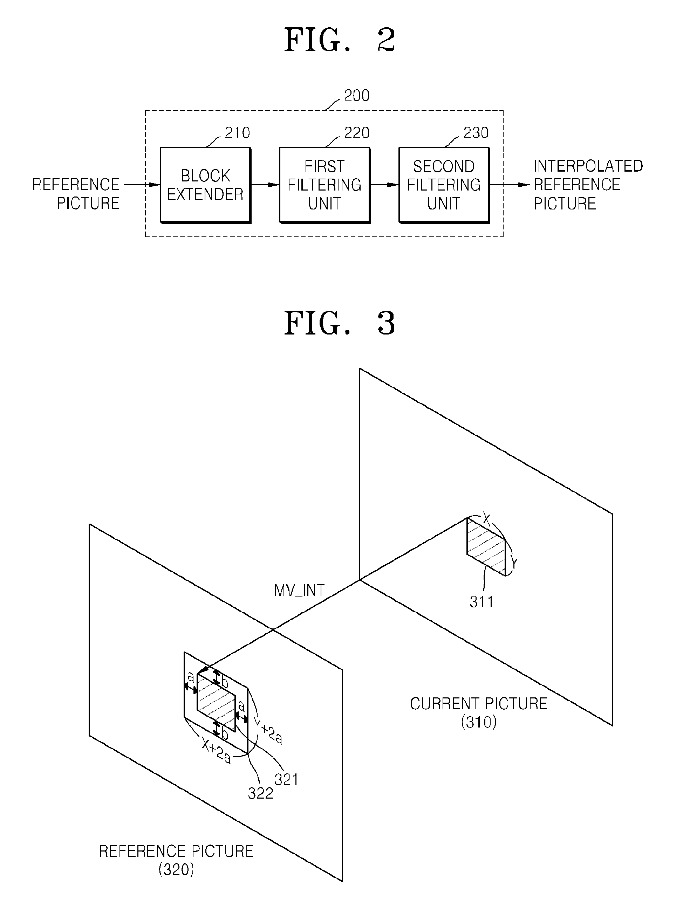

FIG. 2 is a block diagram of a detailed structure of the reference picture interpolator 170 of FIG. 1.

Referring to FIG. 2, the reference picture interpolator 200 includes a block extender 210, a first filtering unit 220, and a second filtering unit 230.

The block extender 210 generates an extended corresponding block by extending a corresponding block of a reference picture indicated by a motion vector of a determined current block to a predetermined size.

The first filtering unit 220 generates a filtered extended corresponding block by applying a predetermined first filter to the extended corresponding block. The second filtering unit 230 performs interpolation in sub-pixel units by applying a predetermined second filter to the filtered extended corresponding block.

FIG. 3 is a reference diagram for describing a process of generating an extended corresponding block, according to an embodiment of the present invention.

Referring to FIGS. 2 and 3, the block extender 210 may determine a corresponding block 321 of a reference picture 320 by using a motion vector MV_INT in integer pixel units of a current block 311 of a current picture 310. In other words, when the motion vector MV_INT in the integer pixel units is determined as the motion estimator 110 performs motion prediction in the integer pixel units, the block extender 210 generates an extended corresponding block 322 by extending a boundary of the corresponding block 321 of the reference picture 320 indicated by the determined motion vector MV_INT to a predetermined pixel size. In detail, when a size of the current block 311 is XxY wherein X and Y are each an integer, the block extender 210 generates the extended corresponding block 322 having a size of (X+2a)x (Y+2b) by extending the boundary of the corresponding block 321 of the reference picture 320 by a pixels in a horizontal direction and b pixels in a vertical direction. Here, the block extender 210 may determine how much to extend the corresponding block 321 according to the size of the current block 311 to be encoded. For example, values of a and b may each be 1, 3, or 6 in proportion to the size of the current block 311. In other words, when the current block 311 has a size of 16x16, 8x8, or 4x4, the block extender 210 may generate the extended corresponding block 322 having a size of 28x28 by extending top, bottom, left, and right boundaries of the corresponding block 321 respectively by 6 pixel units when the size of the current block 311 is 16x16, the extended corresponding block 322 having a size of 14x14 by extending the top, bottom, left, and right boundaries of the corresponding block 321 respectively by 3 pixel units when the size of the current block 311 is 8x8, or the extended corresponding block 322 having a size of 6x6 by extending the top, bottom, left, and right boundaries of the corresponding block 321 respectively by 1 pixel unit when the size of the current block 311 is 4x4.

The first filtering unit 220 generates a filtered extended corresponding block by applying a first filter having an IIR characteristic to the extended corresponding block 322. An IIR filter performs filtering as a value of an input signal and a value of an output signal are recursively applied, and is a filter having an infinite length of an impulse response that is a characteristic function. Since it is impossible to actually perform an infinite calculation to calculate an output value of the IIR filter, the IIR filter is generally applied within a frame unit during an image process. However, when the IIR filter is applied within a frame unit, compression efficiency of an image may be improved but operation complexity is increased since the IIR filter is applied to an entire frame. Accordingly, in an embodiment of the present invention, the IIR filter is applied based on an extended corresponding block so as to reduce the operation complexity while maintaining efficiency of the IIR filter.

According to an embodiment, the first filtering unit 220 may be realized via a filter having a transfer function characteristic as shown in Equation 1 below in a z-region.

[Equation 1]

$$H(z) = c1\left(\frac{1}{1 - z_1 z^{-1}}\right)\left(\frac{-z_1}{1 - z_1 z}\right)$$

In Equation 1, c1 and z1 are each a predetermined constant. Equation 2 below is obtained when Equation 1 is expressed using a recursive algorithm.

[Equation 2]

$$c^+(k) = s(k) + z1 \cdot c^+(k-1)$$
$$c^-(k) = z1 \cdot (c^-(k+1) - c^+(k))$$

In Equation 2, s(k) denotes a (k)th sample value to be filtered in a row or column direction. Referring to Equation 2, c+(k) is a casual filter using a (k-1)th result value before a (k)th sample value that is currently being filtered, and c-(k) is a non-casual filter using a (k+1)th result value after the (k)th sample value that is currently being filtered. The first filtering unit 220 generates the filtered extended corresponding block by performing one-dimensional filtering on the extended corresponding block 322 in the row and column directions by using a recursive operation expression, such as Equation 2. In the above embodiment, the first filtering unit 220 uses the IIR filter having a transfer function characteristic, such as Equations 1 and 2, but one of ordinary skill in the art would understand through the detailed description that the transfer function of the IIR filter used by the first filtering unit 220 may be realized via another recursive algorithm.

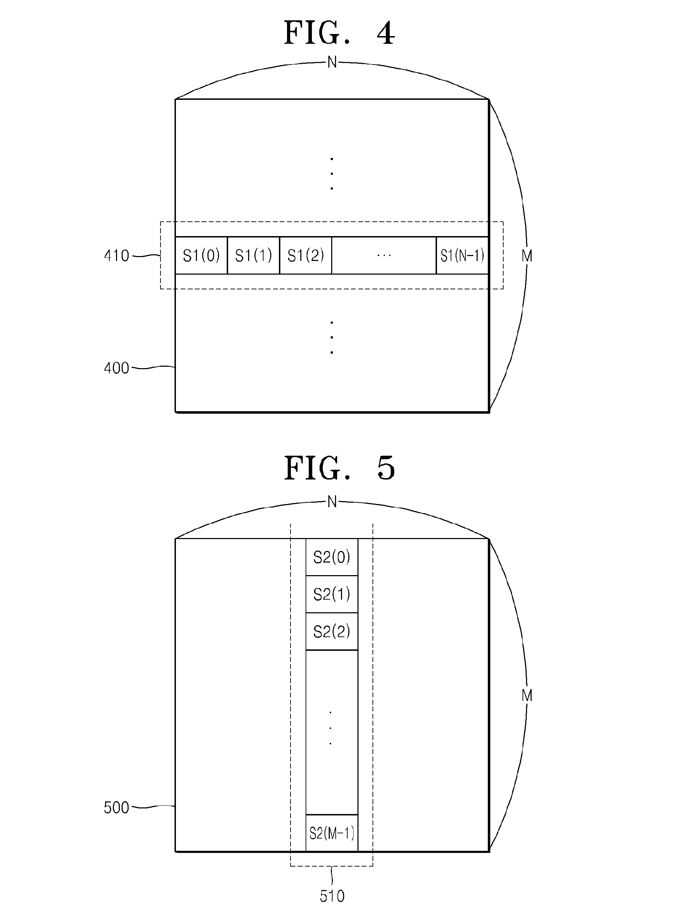

FIG. 4 is a reference diagram for describing a filtering operation performed by the first filtering unit 220 in a row direction, according to an embodiment of the present invention, and FIG. 5 is a reference diagram for describing a filtering operation performed by the first filtering unit 220 in a column direction, according to an embodiment of the present invention.

Referring to FIG. 4, when a size of an extended corresponding block 400 is NxM wherein N and M are each an integer, z1 denotes a predetermined constant, and s1 (k) denotes a pixel value of a (k)th integer pixel located on a predetermined row 410 of the extended corresponding block 400 wherein k is an integer from 0 to N-1, the first filtering unit 220 performs one-dimensional filtering on the extended corresponding block 400 in a row direction by replacing a value of s1 (k) with a value of c2(k) calculated by using equations c1 (k)=s1 (k)+z1*c1 (k-1) and c2(k)=z1*(c2(k+1)-c1 (k)) based on Equation 2 above. The first filtering unit 220 performs the one-dimensional filtering in the row direction on all rows of the extended corresponding block 400.

Referring to FIG. 5, when s2(k) denotes a pixel value of a (k)th integer pixel located on a predetermined column 510 of an extended corresponding block 500 that is filtered in a row direction, the first filtering unit 220 performs one-dimensional filtering on the extended corresponding block 500 in a column direction by replacing a value of s2(k) with a value of c4(k) calculated by using equations c3(k)=s2(k)+z1*c3(k-1) and c4(k)=z1*(c4(k+1)-c3(k)). As such, the first filtering unit 220 finally outputs an extended corresponding block having filtered integer pixels by performing filtering in a column direction by again applying an IIR filter having the same filter characteristic to result values filtered by applying the IIR filter in a row direction.

Referring back to FIG. 2, when the filtering of each integer pixel included in the extended corresponding block is completed by applying the IIR filter to the extended corresponding block by the first filtering unit 220, the second filtering unit 230 performs interpolation in sub-pixel units by using an average value filter and an FIR filter of a predetermined tap coefficient by using values of the IIR filtered integer pixels.

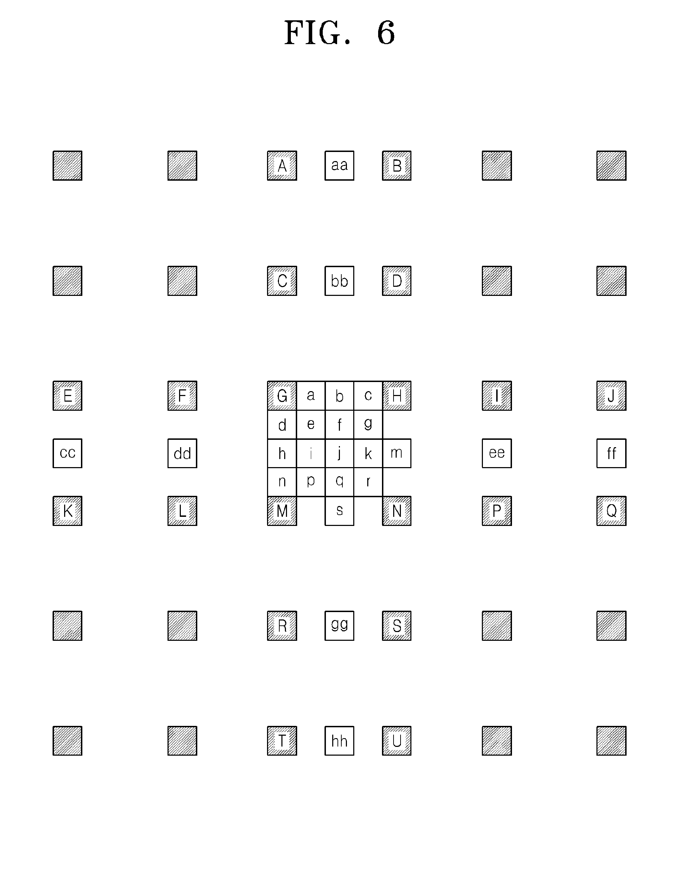

FIG. 6 is a reference diagram for describing an interpolation process performed by the second filtering unit 230 of FIG. 2. FIG. 6 shows a location relationship between an interpolated signal in sub-pixel units and integer pixels filtered by the first filtering unit 220.

Referring to FIG. 6, capital letters A through U denote integer pixels filtered by the first filtering unit 220. Lower case letters a through s in the center denote interpolated pixels having 1/2 or 1/4 pixel precision.

The second filtering unit 230 generates a prediction signal having 1/2 pixel precision by applying an FIR filter having a predetermined tap coefficient to integer pixels filtered by the first filtering unit 220. For example, the second filtering unit 230 interpolates pixels having 1/2 pixel precision by applying a 6-tap FIR filter having a tap coefficient of $\{(1, -5, 20, 20, -5, 1)/32\}$ to the integer pixels filtered by the first filtering unit 220, and interpolates pixels having 1/4 pixel precision by using a 2-tap average value filter. For example, the second filtering unit 230 generates a value of a 1/2 pixel $b$ having 1/2 pixel precision according to equation, $b=(E-5F+20G+20H-5I+J)/32$, by applying horizontal direction 6-tap filtering to integer pixels $E$, $F$, $G$, $H$, $I$, and $J$ filtered by the first filtering unit 220. Also, the second filtering unit 230 generates a 1/2 pixel located in a vertical direction of two integer pixels by performing 6-tap filtering in a vertical direction. For example, the second filtering unit 230 generates a 1/2 pixel $h$ by using equation, $h=(A-5C+20G+20M-5R+T)/32$. The second filtering unit 230 generates a 1/2 pixel located between four integer pixels by applying 6-tap filtering in both horizontal and vertical directions. According to an example of a 1/2 pixel $j$, the second filtering unit 230 first generates 1/2 pixel signals $aa$, $bb$, $b$, $j$, $s$, $gg$, and $hh$ via horizontal direction 6-tap filtering, and then generates the 1/2 pixel $j$ by applying vertical direction 6-tap filtering, i.e., equation, $j=(aa-5bb+20b+20s-5gg+hh)/32$. Alternatively, the second filtering unit 230 may first generate 1/2 pixels $cc$, $dd$, $h$, $m$, $ee$, and $ff$ via vertical direction filtering, and then generate the 1/2 pixel $j$ via horizontal direction filtering, such as equation, $j=(cc-5dd+20h+20m-5ee+ff)/32$.

The second filtering unit 230 may generate a sub-pixel having 1/2 pixel precision and then generate a 1/4 pixel by using an average value filter. 1/4 pixels $a$, $c$, $l$, and $k$ are generated by using a horizontal direction average value filter on an adjacent integer pixel or 1/2 pixel. For example, the second filtering unit 230 generates a 1/4 pixel $a$ by using an average value filter according to equation, $a=(G+b)$. Similarly, 1/4 pixels $d$, $f$, $n$, and $q$ are generated by using a vertical direction average value filter on an adjacent integer pixel or 1/2 pixel. For example, the second filtering unit 230 generates a 1/4 pixel $f$ by using an average value filter according to equation, $f=(b+j)/2$. A diagonal direction average filter may be used for 1/4 pixels $e$, $g$, $p$, and $r$. For example, the second filtering unit 230 generates a 1/4 pixel $r$ by using an average value filter according to equation, $r=(m+s)/2$.

As described above, when the second filtering unit 230 generates a reference picture interpolated in sub-pixel units, the motion estimator 110 may determine a motion vector having sub-pixel precision by searching for a reference picture region most similar to a current block by using the interpolated reference picture. When a final motion vector is determined by comparing rate-distortion (R-D) costs according to each of the motion vectors, information about the final motion vector and predetermined index information indicating whether motion compensation is performed by using the reference picture interpolated via filtering of the extended corresponding block may be inserted into an encoded bitstream, as encoding information.

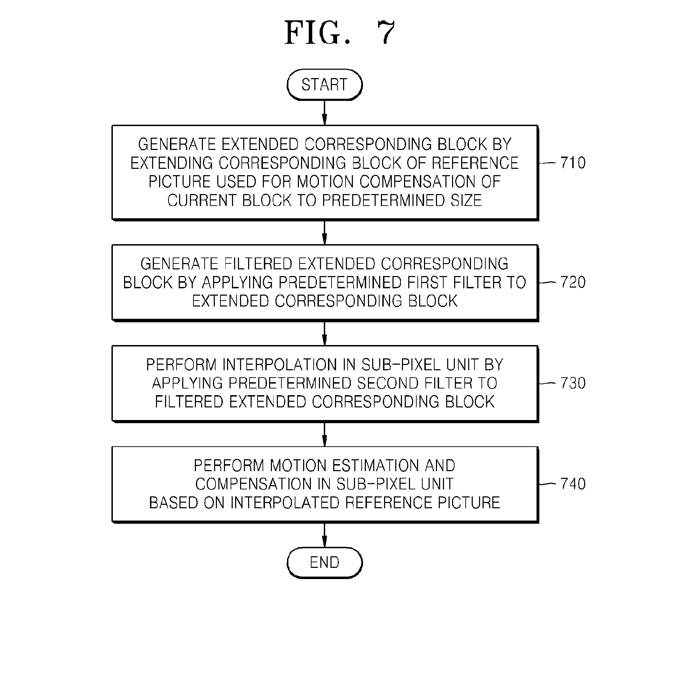

FIG. 7 is a flowchart illustrating a method of encoding a video, according to an embodiment of the present invention.

In operation 710, the block extender 210 generates an extended corresponding block by extending a corresponding block of a reference picture used for motion compensation of a current block to a predetermined size. As described above, the block extender 210 may determine a corresponding block of the reference picture based on a motion vector in integer pixel units determined by the motion estimator 110, and then extend the corresponding block of the reference picture in proportion to a size of the current block.

In operation 720, the first filtering unit 220 generates a filtered extended corresponding block by applying a predetermined first filter to the extended corresponding block. As described above, the first filtering unit 220 outputs an extended corresponding block having changed pixel values by performing filtering using an IIR filter based on each integer pixel included in the extended corresponding block.

In operation 730, the second filtering unit 230 performs interpolation in sub-pixel units by applying a predetermined second filter to the filtered extended corresponding block. As described above, the second filtering unit 230 generates an interpolated reference picture by generating values of sub-pixels having 1/2 or 1/4 pixel precision by applying an FIR filter and an average value filter having a predetermined tap coefficient based on integer pixels of the extended corresponding block filtered by the first filtering unit 220.

In operation 740, the motion estimator 110 and the motion compensator 120 perform motion estimation and compensation in sub-pixel units based on the interpolated reference picture.

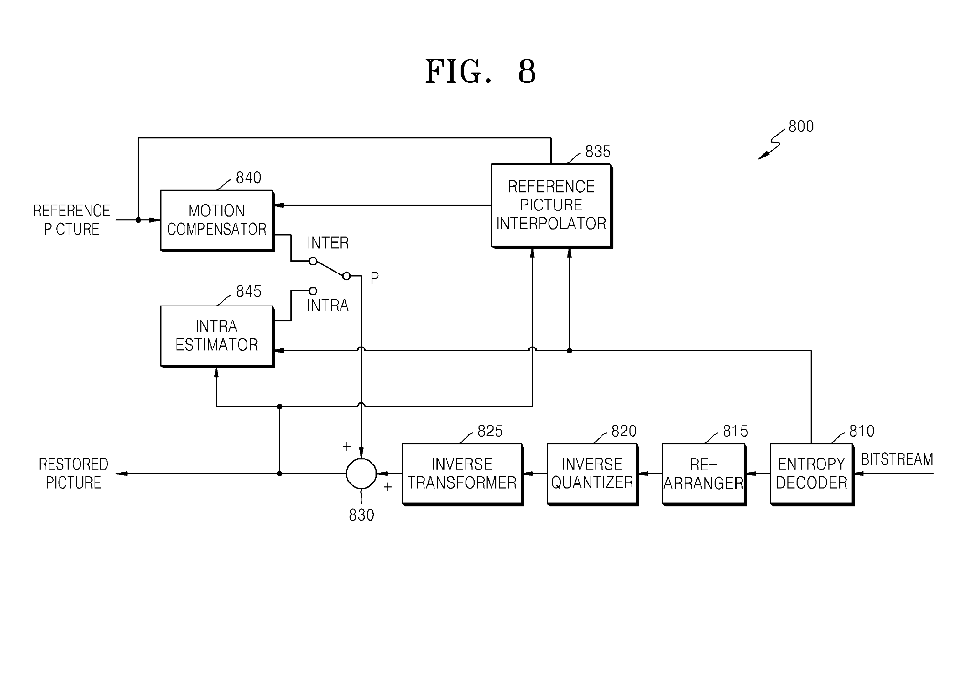

FIG. 8 is a block diagram of an apparatus 800 for decoding a video, according to an embodiment of the present invention.

Referring to FIG. 8, the apparatus 800 includes an entropy decoder 810, a re-arranger 815, an inverse quantizer 820, an inverse transformer 825, an adder 830, a reference picture interpolator 835, a motion compensator 840, and an intra predictor 845.

The entropy decoder 810 generates a quantized coefficient by performing entropy decoding upon receiving a compressed bitstream while extracting information about a motion vector of a current block to be decoded and predetermined index information indicating whether motion compensation is performed by using a reference picture interpolated via filtering of an extended corresponding block, according to an embodiment of the present invention. The re-arranger 815 re-arranges the quantized coefficient, and the inverse quantizer 820 and the inverse transformer 825 restore a residual block by performing inverse quantization and inverse transformation on the quantized coefficient.

The reference picture interpolator 835 interpolates a reference picture for motion compensation of a current block to be decoded, like the reference picture interpolators 170 and 200 of FIGS. 1 and 2 described above. In detail, when a motion vector of a current block is in integer pixel units, a pre-restored reference picture may be used without a separate interpolation process, and thus the reference picture interpolator 170 does not perform interpolation. However, when a motion vector of a current block includes motion in sub-pixel units, such as 1/2 or 1/4 pixel, and predetermined index information indicates that motion compensation is performed by using a reference picture interpolated via filtering of an extended corresponding block, the reference picture interpolator 835 first determines a corresponding block of the reference picture by using integer pixel units component of the motion vector of the current block. For example, when the motion vector of the current block is (4.25, 0.75), the reference picture interpolator 835 determines the corresponding block of the reference picture by using the motion vector in integer pixel units, i.e., (4,0). Also, the reference picture interpolator 835 generates an extended corresponding block by extending the corresponding block of the reference picture used for motion compensation of the current block to a predetermined size. Also, like the reference picture interpolator 200 of FIG. 2 described above, the reference picture interpolator 835 of the apparatus 800 generates a filtered extended corresponding block by applying an IIR filter to the extended corresponding block, and then performs interpolation in sub-pixel units by applying an FIR filter and an average value filter having a predetermined tap coefficient to the IIR filtered extended corresponding block according to a sub-pixel resolution of the current block.

The motion compensator 840 performs motion compensation by using the reference picture interpolated in the sub-pixel units. The adder 830 restores the current block by adding a value obtained via the motion compensation of the current block and the restored residual block. When the current block is intra predicted, the current block is restored as the restored residual block and a prediction block predicted by the intra estimator 845 are added together.

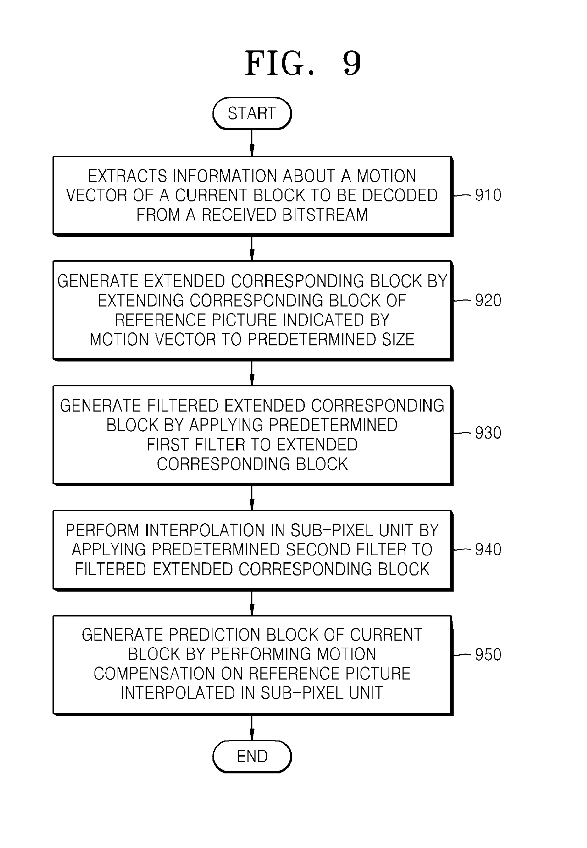

FIG. 9 is a flowchart illustrating a method of decoding a video, according to an embodiment of the present invention.

In operation 910, the entropy decoder 810 extracts information about a motion vector of a current block to be decoded from a received bitstream. The information about the motion vector may include a value of the motion vector of the current block to be decoded and predetermined index information indicating whether motion compensation is performed by using a reference picture interpolated via filtering of an extended corresponding block.

In operation 920, the reference picture interpolator 835 generates an extended corresponding block by extending a corresponding block of a reference picture indicated by the motion vector to a predetermined size. As described above, the reference picture interpolator 835 may determine the corresponding block of the reference picture by using a motion vector component in integer pixel units.

In operation 930, the reference picture interpolator 835 generates a filtered extended corresponding block by applying a predetermined first filter to the extended corresponding block. The predetermined first filter is an IIR filter and is applied to the extended corresponding block as described above, instead of within a frame unit.

In operation 940, the reference picture interpolator 835 performs interpolation in sub-pixel units by applying a predetermined second filter to the filtered extended corresponding block. Here, the predetermined second filter may be a 6-tap filter or a 4-tap filter, which is an FIR filter having a predetermined tap coefficient, or a 2-tap filter which is an average value filter.

In operation 950, the motion compensator 840 generates a prediction block of the current block by performing motion compensation on the reference picture interpolated in the sub-pixel units.

While this invention has been particularly shown and described with reference to embodiments thereof, it will be understood by those of ordinary skill in the art that various changes in form and details may be made therein without departing from the spirit and scope of the invention as defined by the appended claims. The embodiments should be considered in a descriptive sense only and not for purposes of limitation. Therefore, the scope of the invention is defined not by the detailed description of the invention but by the appended claims, and all differences within the scope will be construed as being included in the present invention. The invention may also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, etc. The computer readable recording medium can also be distributed over network coupled computer systems so that the computer readable code may be stored and executed in a distributed fashion.

**Claims**

**1.** A method of encoding a video, the method comprising:

    generating an extended corresponding block by extending a corresponding block of a reference picture used in motion compensation of a current block to a predetermined size;
generating a filtered extended corresponding block by applying a predetermined first filter to the extended corresponding block;
performing interpolation in sub-pixel units by applying a predetermined second filter to the filtered extended corresponding block; and
performing motion prediction and compensation by using the reference picture that is interpolated in the sub-pixel units.

2. The method of claim 1, wherein the generating of the extended corresponding block comprises:

determining the corresponding block of the reference picture most similar to the current block in integer pixel units; and
generating the extended corresponding block by extending top, bottom, left, and right boundaries of the corresponding block by a predetermined pixel size.

3. The method of claim 1, wherein the predetermined first filter is an infinite impulse response (IIR) filter and the predetermined second filter is a finite impulse response (FIR) filter.

4. The method of claim 1, wherein the generating of the filtered extended corresponding block comprises:

changing pixel values of integer pixels included in the extended corresponding block by applying the predetermined first filter of one-dimension to the extended corresponding block in a row direction; and
changing pixel values of integer pixels included in the extended corresponding block by applying the predetermined first filter of one-dimension to the extended corresponding block having the changed pixel values in a column direction.

5. The method of claim 1, wherein the generating of the filtered extended corresponding block comprises:

when a size of the extended corresponding block is NxM, wherein N and M are each an integer, $z_1$ denotes a predetermined constant, and $s_1(k)$ denotes a pixel value of a $(k)$th integer pixel located at a predetermined row of the extended corresponding block, wherein k is an integer from 0 to N-1, performing one-dimensional filtering on the extended corresponding block in a row direction by replacing a value of $s_1(k)$ with a value of $c_2(k)$ calculated according to equations $c_1(k)=s_1(k)+z_1(k)+z_1*c_1(k-1)$ and $c_2(k)=z_1*(c_2(k+1)-c_1(k))$; and
when $s_2(k)$ denotes a pixel value of a $(k)$th integer pixel located at a predetermined column of the extended corresponding block that is one-dimensional filtered in the row direction, wherein k is an integer from 0 to M-1, performing one-dimensional filtering on the extended corresponding block in a column direction by replacing a value of $s_2(k)$ with a value of $c_4(k)$ calculated according to equations $c_3(k)=s_2(k)+z_1*c_3(k-1)$ and $c_4(k)=z_1*(c_4(k+1)-c_3(k))$.

6. The method of claim 1, wherein the performing of the interpolation in the sub-pixel units comprises performing the interpolation in the sub-pixel units by using an average value filter and an FIR filter of a predetermined tap coefficient using a weighted sum of pixel values of integer pixels around a sub-pixel to be interpolated.

7. The method of claim 1, further comprising encoding predetermined index information indicating whether motion prediction and compensation are performed using the filtered extended corresponding block.

8. A method of decoding a video, the method comprising:

extracting information about a motion vector of a current block to be decoded from a received bitstream;
generating an extended corresponding block by extending a corresponding block of a reference picture indicated by the motion vector to a predetermined size;
generating a filtered extended corresponding block by applying a predetermined first filter to the extended corresponding block;
performing interpolation in sub-pixel units by applying a predetermined second filter to the filtered extended corresponding block; and
performing motion compensation by using the reference picture that is interpolated in the sub-pixel units.

9. The method of claim 8, wherein the generating of the extended corresponding block comprises:

determining the corresponding block of the reference picture most similar to the current block by using a component of integer pixel units of the motion vector; and

generating the extended corresponding block by extending top, bottom, left, and right boundaries of the corresponding block by a predetermined pixel size.

10. The method of claim 8, wherein the predetermined first filter is an infinite impulse response (IIR) filter and the predetermined second filter is a finite impulse response (FIR) filter.

11. The method of claim 8, wherein the generating of the filtered extended corresponding block comprises:

changing pixel values of integer pixels included in the extended corresponding block by applying the predetermined first filter of one-dimension to the extended corresponding block in a row direction; and

changing pixel values of integer pixels included in the extended corresponding block by applying the predetermined first filter of one-dimension to the extended corresponding block having the changed pixel values in a column direction.

12. The method of claim 8, wherein the generating of the filtered extended corresponding block comprises:

when a size of the extended corresponding block is NxM, wherein N and M are each an integer, $z1$ denotes a predetermined constant, and $s1(k)$ denotes a pixel value of a $(k)$th integer pixel located at a predetermined row of the extended corresponding block, wherein k is an integer from 0 to N-1, performing one-dimensional filtering on the extended corresponding block in a row direction by replacing a value of $s1(k)$ with a value of $c2(k)$ calculated according to equations $c1(k)=s1(k)+z1*c1(k-1)$ and $c2(k)=z1*(c2(k+1)-c1(k))$; and

when $s2(k)$ denotes a pixel value of a $(k)$th integer pixel located at a predetermined column of the extended corresponding block that is one-dimensional filtered in the row direction, wherein k is an integer from 0 to M-1, performing one-dimensional filtering on the extended corresponding block in a column direction by replacing a value of $s2(k)$ with a value of $c4(k)$ calculated according to equations $c3(k)=s2(k)+z1*c3(k-1)$ and $c4(k)=z1*(c4(k+1)-c3(k))$.

13. The method of claim 8, wherein the performing of the interpolation in the sub-pixel units comprises performing the interpolation in the sub-pixel units by using an average value filter and an FIR filter of a predetermined tap coefficient using a weighted sum of pixel values of integer pixels around a sub-pixel to be interpolated.

14. An apparatus for encoding a video, the apparatus comprising:

a block extender for generating an extended corresponding block by extending a corresponding block of a reference picture used in motion compensation of a current block to a predetermined size;

a first filtering unit for generating a filtered extended corresponding block by applying a predetermined first filter to the extended corresponding block;

a second filtering unit for performing interpolation in sub-pixel units by applying a predetermined second filter to the filtered extended corresponding block; and

a motion predictor and compensator for performing motion prediction and compensation by using the reference picture that is interpolated in the sub-pixel units.

15. An apparatus for decoding a video, the apparatus comprising:

an entropy decoder for extracting information about a motion vector of a current block to be decoded from a received bitstream;

a block extender for generating an extended corresponding block by extending a corresponding block of a reference picture indicated by the motion vector to a predetermined size;

a first filtering unit for generating a filtered extended corresponding block by applying a predetermined first filter to the extended corresponding block;

a second filtering unit for performing interpolation in sub-pixel units by applying a predetermined second filter to the filtered extended corresponding block; and

a motion compensator for performing motion compensation by using the reference picture that is interpolated in the sub-pixel units.

# FIG. 1

# FIG. 2

# FIG. 3

# FIG. 4

N

410

| S1(0) | S1(1) | S1(2) | ... | S1(N-1) |

M

400

# FIG. 5

N

| S2(0) |
| S2(1) |
| S2(2) |
| ⋮ |
| S2(M-1) |

M

500

510

# FIG. 6

| | | A | aa | B | | |
| | | C | bb | D | | |

| E | F | G a b c H | I | J |
| cc | dd | d e f g | ee | ff |
| | | h i j k m | | |
| | | n p q r | | |
| K | L | M s N | P | Q |

| | | R | gg | S | | |

| | | T | hh | U | | |

# FIG. 7

START

GENERATE EXTENDED CORRESPONDING BLOCK BY EXTENDING CORRESPONDING BLOCK OF REFERENCE PICTURE USED FOR MOTION COMPENSATION OF CURRENT BLOCK TO PREDETERMINED SIZE — 710

GENERATE FILTERED EXTENDED CORRESPONDING BLOCK BY APPLYING PREDETERMINED FIRST FILTER TO EXTENDED CORRESPONDING BLOCK — 720

PERFORM INTERPOLATION IN SUB-PIXEL UNIT BY APPLYING PREDETERMINED SECOND FILTER TO FILTERED EXTENDED CORRESPONDING BLOCK — 730

PERFORM MOTION ESTIMATION AND COMPENSATION IN SUB-PIXEL UNIT BASED ON INTERPOLATED REFERENCE PICTURE — 740

END

# FIG. 8

800

REFERENCE
PICTURE → MOTION COMPENSATOR (840)

INTER

P

INTRA

INTRA ESTIMATOR (845)

REFERENCE PICTURE INTERPOLATOR (835)

RESTORED PICTURE ←

+ (830) +

INVERSE TRANSFORMER (825)

INVERSE QUANTIZER (820)

RE-ARRANGER (815)

ENTROPY DECODER (810)

BITSTREAM

EP 2 571 273 A2

# FIG. 9

START

EXTRACTS INFORMATION ABOUT A MOTION VECTOR OF A CURRENT BLOCK TO BE DECODED FROM A RECEIVED BITSTREAM —— 910

GENERATE EXTENDED CORRESPONDING BLOCK BY EXTENDING CORRESPONDING BLOCK OF REFERENCE PICTURE INDICATED BY MOTION VECTOR TO PREDETERMINED SIZE —— 920

GENERATE FILTERED EXTENDED CORRESPONDING BLOCK BY APPLYING PREDETERMINED FIRST FILTER TO EXTENDED CORRESPONDING BLOCK —— 930

PERFORM INTERPOLATION IN SUB-PIXEL UNIT BY APPLYING PREDETERMINED SECOND FILTER TO FILTERED EXTENDED CORRESPONDING BLOCK —— 940

GENERATE PREDICTION BLOCK OF CURRENT BLOCK BY PERFORMING MOTION COMPENSATION ON REFERENCE PICTURE INTERPOLATED IN SUB-PIXEL UNIT —— 950

END